# EUROPÄISCHE PATENTANMELDUNG

(11) **EP 4 492 174 A1**
(43) Veröffentlichungstag der Anmeldung: **15.01.2025**
(21) Anmeldenummer: 24181680.0
(22) Anmeldetag: 12.06.2024
(51) Int. Cl.: G05B 19/423, B25J 21/00

(54) **VERPACKUNGSMASCHINE SOWIE VERFAHREN ZU DEREN BETRIEB**

(30) Priorität: 10.07.2023 DE 102023118216
(71) Anmelder: Krones Aktiengesellschaft, 93073 Neutraubling (DE)
(72) Erfinder: DENNEMARCK, Peter, 93073 Neutraubling (DE)
(74) Vertreter: Benninger, Johannes

(57) **Zusammenfassung**

Es sind eine Verpackungsmaschine (10) mit wenigstens einem programmgesteuerten Manipulator (14) sowie ein Verfahren zur Programmierung von Bewegungsroutinen wenigstens eines innerhalb einer Verpackungsmaschine (10) eingesetzten programmgesteuerten Manipulators (14) offenbart.

Dem Manipulator (14) ist eine Sensorik zur Erfassung von auf den Manipulator (14) einwirkenden äußeren Beeinflussungen zugeordnet. Die von der Sensorik erfassten Signaldaten werden einer Manipulatorsteuerung (32) als Eingangsgrößen zur Anpassung der vom Manipulator (14) jeweils ausgeführten Manipulationsbewegungen an die von der Sensorik erfassten äußeren Einwirkungen zur Verfügung gestellt.

Zumindest definierte Teilabschnitte der vom Benutzer (42) vorgegebenen und mittels der Sensorik erfassten manuellen Beeinflussungen werden aufgezeichnet und für die Erstellung neuer oder für die Modifikation schon vorhandener Bewegungsroutinen des programmgesteuerten Manipulators (14) verarbeitet.

## Beschreibung

Die vorliegende Erfindung betrifft eine Verpackungsmaschine mit wenigstens einem programmgesteuerten Manipulator sowie ein Verfahren zur Programmierung von Bewegungsroutinen wenigstens eines innerhalb einer Verpackungsmaschine eingesetzten programmgesteuerten Manipulators.

Die vorliegende Erfindung findet ihre Anwendung insbesondere im Bereich von Verpackungsmaschinen, die bspw. einen Bestandteil einer integrierten Getränkeabfüll- und Verpackungsanlage bilden oder einer Getränkeabfüll- und Handhabungsanlage nachgeordnet sein können.

Bei der Verarbeitung, Zusammenstellung, Gruppierung und Verpackung von Artikeln wie bspw. von Getränkebehältern, Dosen etc. stehen mehrere unterschiedliche Verpackungsarten zur Verfügung, so etwa die Zusammenfassung der Artikel oder Behälter zu tragbaren, relativ handlichen Verpackungseinheiten, die oftmals auch als Gebinde oder Gebindeeinheiten bezeichnet werden. Bekannt sind etwa Schrumpffoliengebinde, Umreifungsgebinde oder Kartongebinde, wobei die Gebindevarianten auch untereinander kombiniert werden können.

Die oftmals auch als Sekundärverpackungen bezeichneten Schrumpffolien-, Papier- oder Kartonverpackungen für mehrere damit zusammengefasste Artikel oder Primärverpackungen werden in der Verpackungsmaschine meist als Endlosmaterial zugeführt, wobei dieses Endlosmaterial normalerweise als Rollenmaterial zur Verfügung gestellt ist. Das Papier-, Karton- oder Folienmaterial kann kontinuierlich von solchen Magazinrollen abgewickelt, in jeweils passende Längenabschnitte unterteilt und z.B. mittels eines Einschlagmoduls um Artikel- oder Behältergruppierungen gelegt werden. Im Falle von Papier- oder Kartonmaterial ist ein Verkleben von überlappenden Abschnitten sinnvoll, während eine um die jeweilige Artikel- oder Behältergruppierung Verpackungsfolien einer Wärmebehandlung unterzogen werden kann, was bei schrumpfbaren Folien zu einer erwünschten Längenreduzierung und damit zu einer fest um die Artikel- oder Behältergruppierung gespannten Schrumpffolienverpackung führt.

Das Abwickeln des verwendeten Verpackungsmaterials bzw. der schrumpfbaren Folie von der jeweils als Magazin genutzten Rolle erfolgt üblicherweise maschinell und in kontinuierlichem Prozess. Ist eine solche Rolle abgewickelt und der Vorrat an Verpackungsmaterial somit erschöpft, so muss die verbrauchte Rolle ersetzt werden, um den weiteren Zuführprozess für das Verpackungsmaterial aufrechterhalten zu können. Während der automatisierte Wechsel innerhalb der Verpackungsmaschine von einer verbrauchten Rolle zu einer neuen Rolle mit darauf aufgewickeltem Verpackungsmaterial aufgrund der bekannten Rollenpositionen im jeweiligen Magazin in aller Regel keine Schwierigkeiten bereitet und in sehr kurzer Zeit durchführbar ist, erfordert ein automatisierter Austausch von neuen Rollen normalerweise einen höheren Aufwand, um unerwünschte Verzögerungen oder Unterbrechungen in den Prozessabläufen zu vermeiden.

Die DE 10 2021 100 035 A1 offenbart ein Verpackungssystem zum Verpacken von Artikel wie Getränkebehältern, bei der einer Verpackungsmaschine Verpackungsmaterial von mindestens einer Vorratsrolle zur Verfügung gestellt wird. Das Verpackungsmaterial wird innerhalb der Verpackungsmaschine zum Verpacken von Artikelgruppierungen eingesetzt. Zur Versorgung der Verpackungsmaschine mit Vorratsrollen und/oder zum Abtransport verbrauchter Vorratsrollen werden bei dem hier offenbarten Verpackungssystem fahrerlose Transportfahrzeuge eingesetzt. Außerdem können als Knickarmroboter ausgebildete Handhabungseinrichtungen vorgesehen sein, mit denen die Vorratsrollen von der Verpackungsmaschine und/oder von den fahrerlosen Transportfahrzeugen entnommen werden oder in die Verpackungsmaschine eingesetzt bzw. auf das Transportfahrzeug aufgelegt werden können.

Auch andere Handhabungssysteme sind bekannt, etwa solche mit feststehenden oder beweglichen Handhabungsrobotern.

Bei allen den genannten Austauschvorgängen ist eine automatisierte Vorgehensweise wünschenswert, was nicht zuletzt in den hohen Personalkosten bei einer manuellen Handhabung von Rollen begründet ist. Manuelle Eingriffe bringen zudem nicht nur das Risiko von Fehlbedienungen mit sich, sondern bergen eine grundsätzliche Verletzungsgefahr, da die Rollen mit Verpackungsmaterial in aller Regel hohe Massen aufweisen, so dass sie meist nur mit maschineller Unterstützung zu handhaben sind. Sollen die manuellen Eingriffe entfallen und alle Handhabungsprozesse durch automatisiert steuerbare Handhabungseinrichtungen wie z.B. Portal- oder Knickarmroboter durchgeführt werden, so setzt dies präzise festgelegte Aufnahme-, Übergabe- und Absetzpositionen voraus. Andernfalls besteht das permanente Risiko von Fehlfunktionen, wenn etwa der jeweilige Roboter eine Rolle von einem Bereitstellungsplatz aufnehmen will und diese Rolle sich nicht exakt an der erwarteten Position befindet.

Soll die Gefahr von Fehlfunktionen reduziert werden, besteht die Möglichkeit, kollaborierende Roboter einzusetzen, die in einer Weise ausgestattet und konfiguriert sind, um eine weitgehend gefahrlose Roboter-Mensch-Interaktion zu ermöglichen. Der Einsatz eines solchen kollaborierenden Roboters wird mit der WO 2018 228 727 A1 vorgeschlagen, um innerhalb einer Behälterbehandlungsmaschine bei einem Wechsel von Bauteilen mitzuwirken. Es wird vorgeschlagen, den kollaborierenden Roboter ohne trennende Schutzeinrichtung zu betreiben, womit eine unmittelbare Führung der vom Roboter auszuführenden Handhabungsprozesse durch einen sich innerhalb eines Bewegungsraumes des Roboters aufhaltenden Benutzer ermöglicht ist. Um die Kollisionsrisiken mit sich in einer Umgebung des kollaborierenden Roboters aufhaltenden Menschen zu minimieren, wird weiterhin vorgeschlagen, den kollaborierenden Roboter mit einem geeigneten Sicherungssystem auszustatten.

Die Verwendung eines solchen kollaborierenden Roboters ermöglicht es zwar, auf veränderliche Aufnahme- oder Übernahmepositionen für aufzunehmende und in eine Verpackungsmaschine einzusetzende Materialvorräte für Verbrauchsmaterialien, bspw. in Form von Folien- oder Papierrollen, zu reagieren. Allerdings erfordert der Einsatz kollaborierender Roboter einen erhöhten Überwachungs- und Steuerungsaufwand, um Risiken für Benutzer zu minimieren, die sich zwangsläufig innerhalb des Aktionsraumes eines solchen Roboters aufhalten müssen, um ihn bei seinen Positionierungsbewegungen zu unterstützen. Zudem stellt sich erneut das Problem des erhöhten Personalaufwandes, da der Roboter einer menschlichen Unterstützung bedarf, um kompliziertere Bewegungsroutinen durchführen zu können und um Fehlfunktionen zu vermeiden.

Angesichts dieser erkannten Unzulänglichkeiten kann es als vorrangiges Ziel der Erfindung betrachtet werden, einer Verpackungsmaschine eine möglichst fehlertolerante Zufuhr von Verbrauchsmaterialien zu bieten, wobei solche Vorgänge durch Robotertechnik unterstützt werden sollen. Gleichzeitig sollen wiederholte Zuführ- und/oder Austauschvorgänge, bei denen der Verpackungsmaschine weitere Verbrauchsmaterialien zur Verfügung gestellt werden, mit reduzierter oder minimierter manueller Unterstützung ermöglicht werden.

Diese Ziele der Erfindung werden mit den Gegenständen der unabhängigen Ansprüche erreicht. Weitere vorteilhafte Ausgestaltungen werden durch die jeweiligen abhängigen Ansprüche beschrieben.

Zur Erreichung der genannten Ziele schlägt die Erfindung neben einem weiter unten in unterschiedlichen Ausführungsvarianten erläuterten Verfahren eine Verpackungsmaschine mit wenigstens einem programmgesteuerten Manipulator vor, welchem Manipulator eine Sensorik zur Erfassung von auf den Manipulator einwirkenden äußeren Beeinflussungen zugeordnet ist, wobei die von der Sensorik erfassten Sensor- und/oder Signaldaten einer Manipulatorsteuerung als Eingangsgrößen zur Anpassung der vom Manipulator jeweils ausgeführten Manipulationsbewegungen an die von der Sensorik erfassten äußeren Einwirkungen zur Verfügung gestellt werden. Eine solche Ansteuerung eines Manipulators kann im weitesten Sinne auch als COBOT-Steuerung betrachtet werden, wie sie nachfolgend noch näher erläutert wird.

Bei der erfindungsgemäßen Verpackungsmaschine ist weiterhin vorgesehen, dass die Manipulatorsteuerung in einem Programmiermodus betreibbar ist, der eine Aufzeichnung zumindest solcher von mittels der Sensorik erfassten äußeren Einwirkungen vorsieht, die auf manuellen Beeinflussungen eines sich innerhalb eines Bewegungsraumes des Manipulators aufhaltenden Benutzers beruhen. In diesem Programmiermodus sind aus den auf den Benutzer zurückzuführenden manuellen Beeinflussungen des Manipulators jeweils Programmschritte zur Erstellung neuer oder zur Modifikation schon vorhandener Bewegungsroutinen des programmgesteuerten Manipulators ableitbar.

Die im Programmiermodus zu erstellenden und/oder zu programmierenden Bewegungsroutinen des programmgesteuerten Manipulators oder Roboters können insbesondere im Zusammenhang mit der Bereitstellung von Verbrauchsmaterial gesehen werden, welches der Verpackungsmaschine regelmäßig oder bedarfsweise zur Verfügung gestellt und das in der Verpackungsmaschine verbraucht wird. Das Verbrauchsmaterial kann bspw. Verpackungsmaterial wie Folie, Schrumpffolie, Papiermaterial o.ä. sein, mit dem Stückgüter, Artikelgruppierungen, Behältergruppierungen etc. umhüllt oder ausgestattet werden, um solchermaßen Verpackungseinheiten oder Gebindeeinheiten zu bilden.

Die Umschaltung in den COBOT-Modus kann insbesondere durch eine dafür vorgesehene Sensorik initiiert werden, so dass bspw. ein Lichtgitter oder Ultraschallsensoren erfassen können, wenn sich eine Person in den Bewegungsraum des Manipulators oder Roboters hineinbegibt. Der COBOT-Betrieb kann wahlweise durch sensorische Erkennung eines von Personen freien Bewegungsraumes oder auch durch manuelle Vorgabe beendet werden.

Die dem Manipulator oder dem Roboter zugeordnete Sensorik kann bspw. durch optische Sensoren wie Kameras mit nachgeschalteter Bildauswertung oder z.B. auch durch akustische Sensoren gebildet sein. Vorzugsweise jedoch kann es sinnvoll sein, die Sensorik in einer Weise auszubilden, dass die Antriebsmomente für die elektrischen Stellmotoren des Manipulators oder des Roboters ausgewertet werden, so dass daraus auf Beeinflussungen von außen geschlossen werden kann und/oder dass daraus auf einen sich innerhalb des Bewegungsraumes des Manipulators aufhaltenden und den Manipulator beeinflussenden Benutzer geschlossen werden kann.

Sofern dies aus Sicht des angesprochenen Fachmannes sinnvoll ist, können wiederum einige der oder alle dieser zuvor genannten Variationen oder Ausführungsvarianten der erfindungsgemäßen Verpackungsmaschine wahlweise auch miteinander kombiniert werden, um die oben formulierten Ziele zumindest teilweise zu erreichen, und/oder um den gewünschten Effekt der Erfindung zu erzielen.

Die Ausstattung der erfindungsgemäßen Verpackungsmaschine mit der beschriebenen Manipulatortechnik oder Robotik, die mittels sicherer Antriebstechnik, etwas in Gestalt einer COBOT-Technik, oder durch geeignete Sensorik gegenüber menschlichen Zugriffen geschützt ist, ermöglicht schnelle und wenig personalintensive Wartungs- und Austauschvorgänge zur Beladung der Verpackungsmaschine mit Verbrauchsmaterialien. Sobald die Maschine beladen und z.B. mit neuen Folienrollen ausgestattet werden soll, kann ein verantwortlicher und geschulter Benutzer den normalerweise nicht zu betretenden Sicherheitsbereich betreten, der innerhalb einer Reichweite eines Roboterarmes oder von beweglichen Manipulatorenteilen liegt. Hierbei wird der Manipulator oder Roboter in einen geführten und nicht mehr autonom arbeitenden COBOT-Betrieb umgeschaltet, so dass der bewegliche Manipulator- oder Roboterarm vom Benutzer geführt und in alle relevanten Positionen gebracht werden kann. Eine dieser Positionen kann insbesondere der Übernahmeort für das in die Verpackungsmaschine zu bringende Verbrauchsmaterial sein, z.B. eine am Boden oder auf einer Palette stehende Rolle mit Verpackungsfolie.

Nach dem Einsetzen dieser Rolle in die Verpackungsmaschine, was vorzugsweise ebenfalls im COBOT-Betrieb erfolgen kann, ist ein erster Durchgang zur Programmierung der Bewegungssteuerung des Manipulators oder Roboters abgeschlossen. Diese Vorgänge können mehrfach und grundsätzlich beliebig oft wiederholt werden. Alle Bewegungen, die von den beweglichen Manipulator- oder Roboterabschnitten in vom Benutzer geführten Weise ausgeführt werden, finden Eingang in einen entsprechend ausgestatteten Speicherbereich der Manipulatorsteuerung, um für künftige Bewegungsabläufe abgerufen werden zu können.

Wahlweise kann die Manipulator- oder Robotersteuerung nach einer gewissen Anzahl von solchen Lerndurchgängen oder Lernzyklen durch optische und/oder akustische Signalanzeige oder auf andere Weise signalisieren, dass die Abläufe nun bekannt sind und in der weiteren Folge vom Manipulator oder vom Roboter in automatisierter und weitgehend autonomer Weise, d.h. ohne zusätzliche menschliche Führung, ausgeführt werden können. Gegebenenfalls kann hierauf eine Bestätigung oder Quittierung durch den Benutzer sinnvoll sein, bevor dieser den Sicherheitsbereich in der unmittelbaren Umgebung des Manipulators oder Roboters verlässt.

Im weiteren Verlauf kann der autonome und/oder automatisierte Ablauf zumindest so lange aufrechterhalten bleiben, bis eine neue und bisher unbekannte Position für eine der Start- oder Zielpositionen des beweglichen Manipulator- oder Roboterarms erscheint, etwa verursacht durch Anlieferung einer neuen Palette mit Verbrauchsmaterial, deren Absetzposition sich von einer Absetzposition einer zuvor dort abgesetzten Palette unterscheidet. In diesem Fall kann der Benutzer wieder einen weiteren Programmierzyklus beginnen und den Manipulator oder Roboter im COBOT-Betrieb mit neuen Bewegungsroutinen anlernen und in der oben beschriebenen Weise programmieren.

Die wesentlichen Vorteile der entsprechend ausgestatteten Verpackungsmaschine sowie des nachfolgend erläuterten erfindungsgemäßen Verfahrens bestehen darin, dass der Benutzer nur für vergleichsweise kurze Zeit die Beladeprozesse begleiten muss, wogegen der Manipulator oder Roboter die meisten Abschnitte der Beladeprozesse autonom und/oder automatisiert ausführen kann. Es muss keine genaue Einrichtung und Programmierung der beweglichen Manipulator- oder Roboterteile durchgeführt werden, da dies durch die Programmierung des Manipulators oder Roboters im COBOT-Betrieb auf einfache und vergleichsweise schnelle Weise erfolgen kann.

Dadurch sind schnellere, weitgehend störungsfreie und vergleichsweise ergonomisch günstige Beladevorgänge ermöglicht. Auch bei der Zuführung von Zuschnitten und Kartonbögen muss keine hochpräzise Zuführung erfolgen, da unterschiedliche Ablagepositionen durch Neuprogrammierung der Handhabungseinrichtungen im COBOT-Betrieb ausgeglichen werden können.

Bei der erfindungsgemäßen Verpackungsmaschine kann der programmgesteuerte Manipulator insbesondere durch einen Handhabungsroboter gebildet sein, der für unterschiedliche Handhabungsaufgaben in der oder an der Verpackungsmaschine vorgesehen sein kann. Ein solcher Handhabungsroboter kann bspw. einen beweglichen Schwenkarm mit um mehrere Achsen beweglichen Armabschnitten umfassen. Solche häufig als Industrieroboter bezeichnete Handhabungsroboter können bspw. durch sog. Fünfachs- oder Sechsachs-Knickarmroboter ausgebildet sein, an deren freiem beweglichem Endabschnitt Greifelemente oder andere Manipulationselemente angeordnet sein können. Grundsätzlich kann der Handhabungsroboter auch durch einen Parallelkinematik-Roboter o. dgl. gebildet sein.

Zur Erreichung zumindest eines Teils der oben genannten Ziele schlägt die Erfindung neben der oben beschriebenen Verpackungsmaschine weiterhin ein Verfahren zur Programmierung von Bewegungsroutinen wenigstens eines innerhalb einer Verpackungsmaschine eingesetzten programmgesteuerten Manipulators vor, wobei diesem Manipulator eine Sensorik zur Erfassung von äußeren Einwirkungen auf den Manipulator zugeordnet ist. Mit dem hier verwendeten Begriff der äußeren Einwirkungen können im Wesentlichen manuelle Beeinflussungen eines sich innerhalb eines Bewegungsraumes des Manipulators aufhaltenden Benutzers gemeint sein. Sofern sich ein menschlicher Benutzer innerhalb eines Bewegungsraumes des Manipulators aufhält, werden die vom Manipulator jeweils ausgeführten Manipulationsbewegungen vorzugsweise an die von der Sensorik erfassten äußeren Einwirkungen angepasst, d.h. die beweglichen Teile des Manipulators lassen sich vom menschlichen Benutzer in gewissem Ausmaß lenken und die Bewegungsrichtungen vom Benutzer vorgeben.

Wenn die genannten Bedingungen erfüllt sind, kann bei einem solchermaßen gesteuerten Manipulator von einem kollaborierenden Manipulator oder von einem kollaborierenden Roboter gesprochen werden, der dazu geeignet und dafür ausgestattet ist, wahlweise als herkömmlich betriebener und rein programmgesteuerter Roboter, ggf. unter Nutzung und zusätzlicher Verarbeitung von Sensorsignalen zur Erfassung seiner Umgebung oder in einer Roboter-Mensch-Interaktion, d.h. als nicht vollständig programmgesteuerter Roboter oder Manipulator zu arbeiten.

Unter dem hier und im Zusammenhang der gesamten Beschreibung verwendeten Begriff des programmgesteuerten Manipulators oder des programmgesteuerten Roboters können im hiesigen Zusammenhang solche Handhabungseinrichtungen verstanden werden, deren Bewegungsabläufe und Bewegungsroutinen von einem Computer oder von einer rechnergestützten Steuerungseinheit vorgegeben und gesteuert werden, so dass es sich bei den Bewegungsabläufen und Bewegungsroutinen insbesondere um im Wesentlichen oder vollständig programmgesteuerte Vorgänge handelt, was jedoch die zusätzliche Nutzung und Verarbeitung von Sensorsignalen aller Art zur Modifikation und Beeinflussung der Bewegungsabläufe und/oder Bewegungsroutinen nicht ausschließt.

Als solche Sensorsignale können bspw. die Ausgangssignale unterschiedlicher Erfassungseinrichtungen genutzt werden, die ein Vorfeld oder einen Bewegungsraum der Handhabungseinrichtung erfassen und z.B. unerwartete Objekte oder sich im Bewegungsraum aufhaltende Personen erkennen können, so dass sich nach einer Verarbeitung solcher Sensorsignale im Computer oder der rechnergestützten Steuerungseinheit ungewollte Kollisionen mit dem Objekt oder der Person verhindern lassen.

Zudem können unter dem Begriff des kollaborierenden Manipulators oder des kollaborierenden Roboters im vorliegenden Zusammenhang solche Handhabungseinrichtungen verstanden werden, deren Bewegungsabläufe und Bewegungsroutinen nicht vollständig von einem Computer oder von einer rechnergestützten Steuerungseinheit vorgegeben und gesteuert werden, sondern bei denen zusätzlich die Roboter-Mensch-Interaktion berücksichtigt wird, so dass derartige kollaborierenden Manipulatoren oder kollaborierenden Roboter mit Mitteln und Sensoriken ausgestattet sind, die eine Interaktion mit menschlichen Benutzern erlauben, so dass sie mit diesem zum Zwecke der Erfüllung einer bestimmten Aufgabe zusammenarbeiten und Teilschritte eines solchen Prozesses entweder selbst ausführen oder an diesen Prozessen unterstützend beteiligt sind. So kann der kollaborierende Manipulator oder der kollaborierende Roboter z.B. ein für den mitwirkenden Benutzer nicht mehr alleine handhabbares Bauteil oder Objekt heben und positionieren, während der Benutzer selbst von den schweren Hebeaufgaben entlastet ist und im Wesentlichen nur das Bauteil oder Objekt an die richtige Position manövriert, bspw. innerhalb einer Maschine.

Insbesondere sollen unter den hier verwendeten Begriffen des kollaborierenden Manipulators oder des kollaborierenden Roboters die dem Fachmann bekannten COBOTs verstanden werden.

Das Verfahren gemäß vorliegender Erfindung sieht nun vor, dass zumindest definierte Teilabschnitte der vom Benutzer vorgegebenen und mittels der Sensorik erfassten manuellen Beeinflussungen aufgezeichnet und für die Erstellung neuer oder für die Modifikation schon vorhandener Bewegungsroutinen des programmgesteuerten Manipulators verarbeitet werden. Alle diese zu programmierenden Bewegungsroutinen des programmgesteuerten Manipulators oder Roboters können insbesondere im Zusammenhang mit der Bereitstellung von Verbrauchsmaterial gesehen wird, das in der Verpackungsmaschine verbraucht wird. Das Verbrauchsmaterial kann bspw. Verpackungsmaterial wie Folie, Schrumpffolie, Papiermaterial o.ä. sein.

Damit ist gemeint, dass der wenigstens eine innerhalb der Verpackungsmaschine eingesetzte programmgesteuerte Manipulator in zwei unterschiedlichen Betriebsmodi eingesetzt werden kann, wobei bedarfsweise vom einen in den anderen Betriebsmodus und wieder zurück gewechselt werden kann. Sofern die verfügbaren Programmroutinen für eine bevorstehende Handhabungsaufgabe des Manipulators nicht ausreichen, etwa weil eine neue Übernahmeposition zur Aufnahme einer zu erfassenden schweren Last, die an eine bekannte Position innerhalb der Verpackungsmaschine zu überführen ist, noch nicht bekannt ist, kann der Betriebsmodus ausgewählt werden, in dem eine Mensch-Maschine-Interaktion erforderlich ist, um der Programmsteuerung des Manipulators die neue und bisher unbekannte Bewegungsroutine zu vermitteln. Diese neue Bewegungsroutine, die der Manipulator durch Vorgabe und Unterstützung der manuellen Beeinflussung ausführt, wird aufgezeichnet und innerhalb der Programmsteuerung des Manipulators für die Erstellung neuer oder für die Modifikation schon vorhandener Bewegungsroutinen verwendet.

Der Aufbau des Manipulators oder Roboters kann unterschiedlich gestaltet sein. So kann es sich bei dem Manipulator bspw. um einen stationären oder ortsveränderlichen Knickarm-Roboter mit mehrachsig beweglichen Armabschnitten und endseitig angeordnetem Greifarm handeln, wobei die schwenkbar miteinander verbundenen Armabschnitte mittels elektromotorischer Antriebe gegeneinander verschwenkbar sein können. Wahlweise kann es sich auch um einen Portalroboter handeln, dessen Werkzeugkopf ggf. ebenfalls an einem oberseitig aufgehängten Knickarm gehaltert sein kann. Weitere Varianten sind denkbar, etwa sog. Parallelkinematik-Roboter o. dgl. mehr.

Außerdem kann ein Werkzeugkopf eines solchen Manipulators oder Roboters wahlweise Greifarme mit gegeneinander zustellbaren Greifbacken oder andere zweckgebundene Greifeinrichtungen aufweisen. Solche Greifeinrichtungen können bspw. durch einen Greifdorn gebildet sein, mit dem sich schwere Rollen mit darauf aufgewickeltem Verpackungsmaterial erfassen lassen, indem der Greifdorn senkrecht von oben in eine hohlzylindrische Aufnahme eines Rollenkerns eingetaucht und nach dem Eintauchen dort festgeklemmt wird, um die aufrecht auf einem Bereitstellungsplatz stehende Rolle erfassen, heben und in eine vorgesehene Einbauposition innerhalb der Verpackungsmaschine einbringen zu können, wobei die Einbauposition in aller Regel eine liegende Montage mit horizontaler Mittelachse vorsieht.

Damit werden die Bewegungsroutinen für einen entsprechend programmierten Manipulator beispielhaft verdeutlicht, der eine z.B. stehend auf einer Palette angelieferte und neben der Verpackungsmaschine abgestellte Rolle mit Folienmaterial mittels eines Greifdorns erfassen, aufheben, um 90° schwenken und in eine horizontale Position bringen und in dieser Ausrichtung an eine vorgesehene Einbauposition in der Verpackungsmaschine bringen soll, wo die Folie dann von der Rolle abgewickelt werden kann, um als Verpackungsmaterial für Stückgüter, Artikel- oder Behältergruppierungen o. dgl. verwendet zu werden.

Dadurch wird es nachvollziehbar, dass jede Veränderung der Bereitstellungsposition einer bspw. mittels Flurförderfahrzeug angelieferten Palette mit darauf stehend befindlichen neuen Rollen mit Verpackungsfolie oder anderem Verbrauchsmaterial, die mittels programmgesteuerten Manipulators oder Roboters von dort erfasst und in eine Einbauposition innerhalb der Verpackungsmaschine überführt werden sollen, zu notwendigen kleineren Veränderungen in den vom Steuerungsprogramm vorgegebenen Bewegungsroutinen für den beweglichen Greifarm des Manipulators oder Roboters führen muss.

Sofern aber diese Veränderungen eine gesamte Charge mit mehreren neu angelieferten Rollen betreffen, kann es genügen, nach benutzerunterstützter Neuprogrammierung der Manipulatorsteuerung in den anderen Betriebsmodus zurück zu wechseln und den Manipulator alle weiteren Rollen mit Verpackungsmaterial selbsttätig erfassen zu lassen, da er nach erstmaligem Anlernen mit einer ersten Rolle alle weiteren Übernahmepositionen bereits kennt und ohne menschliche Unterstützung im programmgesteuerten Modus weiterarbeiten kann.

Die hier genannte Sensorik des Manipulators oder Roboters kennt in einer einfachsten Variante oder Minimalausstattung die erforderlichen Antriebsmomente und das elektrische Verhalten der jeweiligen Antriebsmotoren für die verschiedenen zusammenwirkenden Gelenkabschnitte, und dies weitgehend für alle denkbaren Positionen und Massen sowie den Schwerpunkten der jeweils ergriffenen Objekte, so dass bereits aus dem Vergleich der zu erwartenden Antriebsmomente und der zu erwartenden Stromaufnahme mit den tatsächlich gemessenen Werten auf eine Beeinflussung durch einen Benutzer geschlossen werden kann. Da eine solchermaßen funktionierende Sensorik sensibel auf alle denkbaren manuellen Beeinflussungen reagieren kann, und da zudem die jeweils für das Programmieren neuer Bewegungsroutinen relevanten Bewegungsabläufe gegenüber einem reinen Roboterbetrieb deutlich verlangsamt sein können, lassen sich durch manuelles Lenken unter vergleichsweise geringem Kraftaufwand sehr präzise Bewegungsmuster des Manipulator- oder Roboterarms vorgeben.

Wahlweise kann die Sensorik in einer erweiterten oder alternativen Ausstattung auch optische und/oder akustische Erfassungseinrichtungen wie Kameras mit nachgeschalteter Bildauswertung oder Ultraschallsensoren mit nachgeschalteter Signalauswertung umfassen, die die Beeinflussungen und Bewegungen aufzeichnen und zusätzlich zur Programmierung zukünftiger Bewegungsroutinen des Roboters genutzt werden können.

Bei dem Verfahren kann vorgesehen sein, dass die Sensorik des Manipulators oder Roboters in mehreren aufeinanderfolgenden Durchläufen jeweils definierte Positionen und Bewegungsmuster erkennen kann, die vom Benutzer vorgegeben werden. Die Sensorwerte können nach Aufzeichnung abgeglichen und allesamt zur Vorgabe und zur Programmierung neuer Bewegungsmuster und Bewegungsroutinen für den programmgesteuerten Betrieb des Manipulators oder Roboters verwendet werden, so dass nach Beendigung der menschlichen Eingriffe, Beeinflussungen und Vorgaben jeweils wieder eine modifizierte Neuprogrammierung für die Bewegungssteuerungen des Manipulators oder Roboters bei der Handhabung der in die Verpackungsmaschine einzubringenden oder von dort zu entnehmenden Objekte, Maschinenteile und/oder Verbrauchsmaterialien zur Verfügung steht.

Somit können die möglicherweise wechselnden Übernahmeorte unter Berücksichtigung leichter Ortsvariationen für die dort abgelegten Verbrauchsmaterialien - dies können z.B. Wechselrollen mit darauf aufgewickeltem Folienmaterial o.ä. sein - durch jeweils neues Anlernen des Roboters im COBOT-Betrieb immer wieder neu programmiert werden.

Jede Entscheidung, ob sich ein COBOT-Betrieb als notwendig erweist, kann bspw. anhand von sensorisch erfassbaren und sensorisch erkannten Markierungen getroffen werden, wahlweise aber auch durch manuelle Vorgabe. D.h., der Manipulator oder Roboter kann ggf. selbsttätig erkennen, ob ein neues Anlernen aufgrund einer sich veränderten Übernahmeposition für weitere zu erfassende Objekte notwendig ist oder ob sich die anzufahrenden Positionen gegenüber dem letzten Bewegungs- und Steuerungszyklus nicht geändert haben.

Die vorher programmierten und genutzten Bewegungsroutinen können wahlweise verworfen oder gelöscht werden, da jede Neuausrichtung einer anzufahrenden Erfassungs- oder Abgabeposition neu zu lernen ist. Zuvor genutzte Bewegungsroutinen können jedoch wahlweise für spätere Verwendungen in einer Bibliothek abgespeichert werden. In diesem Zusammenhang können wiederum bestimmte Markierungen genutzt werden, seien diese optisch, induktiv, RFID-gesteuert oder auf andere Weise erfassbar, um zu erkennen, ob neue Bewegungsroutinen notwendig oder fällig sind oder ob die alten Bewegungsroutinen weitergenutzt werden können.

Eine Umschaltung vom programmgesteuerten Roboter-Betrieb in einen COBOT-Betrieb kann vorzugsweise durch eine eigene Sensorik initiiert werden, bspw. durch geeignete Lichtgitter, Ultraschallsensoren o. dgl., die den Bewegungsraum und/oder die unmittelbare Umgebung des Manipulators oder Roboters erfassen. Wenn also der jeweilige Benutzer in den Bewegungsraum des Roboters oder Manipulators eintritt, kann dieser in den COBOT-Betrieb umgeschaltet werden und kann dann so lange in diesem Modus verbleiben, bis der Benutzer wieder aus dem Bewegungsraum heraustritt oder die unmittelbare Umgebung des Manipulators oder Roboters verlässt.

Sobald der Benutzer wieder aus dem Bewegungsraum herausgetreten ist oder die unmittelbare Umgebung des Manipulators oder Roboters verlassen hat, kann der Roboter oder Manipulator wieder in den regulären Betrieb umgeschaltet werden, in dem er programmgesteuert und ohne Beeinflussung des menschlichen Benutzers arbeiten kann, nutzt hierbei aber die zuvor im COBOT-Betrieb erlernten Bewegungsroutinen für seine aktuell anstehenden Handhabungsaufgaben.

Wie schon oben erläutert, kann der Manipulator oder Roboter bspw. als sog. Beladeroboter genutzt werden, der für manuell nicht sinnvoll bewältigbare Hebe- und Positionierungsaufgaben vorgesehen sein kann, um etwa Verbrauchsmaterialien an eine Verpackungsmaschine heranzubringen und dieser zuzuführen. Zu diesem Zweck befindet sich der ortsfest oder ortsveränderlich positionierte Manipulator oder Roboter vorzugsweise dicht an der Verpackungsmaschine, so dass sich diese innerhalb des Bewegungsraumes des Roboters befindet.

Somit lassen sich die Verbrauchsmaterialien innerhalb des Bewegungsraumes erfassen und positionieren, so dass sie vom Roboter in die Verpackungsmaschine eingesetzt werden können. Da sich aber die Ablageorte für die neuen Verbrauchsmaterialien bei jeder erneuten Ablage leicht ändern können, lernt der Roboter im COBOT-Betrieb immer wieder neu, wo sich die ortsveränderlichen Bereitstellungspositionen für das neue Verbrauchsmaterial jeweils befinden.

Von Vorteil ist dieser umschaltbare Modus insbesondere dann, wenn ganze Magazine bereitgestellt werden, so dass durch Kenntnis des Übernahmeorts der ersten Verbrauchsmaterial-Einheit auch die Übernahmeorte aller weiteren Verbrauchsmaterial-Einheiten des jeweiligen Pakets oder der jeweiligen Charge bekannt sind.

Bei allen beschriebenen Varianten ist es denkbar, dass die Bewegungen des Manipulators oder Roboters durch zusätzliche Sensoren unterstützt werden, bspw. durch Kollisionssensoren, die auf optischem und/oder akustischem Wege Hindernisse erkennen und Kollisionen mit dem Roboterarm und/oder mit dem von diesem ergriffenen Verbrauchsmaterial verhindern können. Da allerdings jegliche zusätzliche Sensorik erhöhten Ausstattungs- und Kostenaufwand bedeutet, kann es bereits genügen, im Wesentlichen nur die Annäherung eines menschlichen Benutzers an den Bewegungsraum und den Aufenthalt des Benutzers innerhalb des Bewegungsraumes des Manipulators oder Roboters zu erfassen, um solchermaßen zwischen dem autonomen bzw. programmgesteuerten Roboterbetrieb und dem menschlich unterstützten und/oder beeinflussten COBOT-Betrieb umschalten zu können. Diese Erfassung kann auch die oben beschriebene Weise erfolgen, bspw. mittels Lichtgittern, einfacher Lichtschranken-Sensorik oder auch auf andere Weise, etwa mittels einer Ultraschallüberwachung.

Sofern aus Sicht des angesprochenen Fachmannes sinnvoll miteinander kombinierbar, können einige der oder alle dieser zuvor genannten Variationen oder Ausführungsvarianten des erfindungsgemäßen Verfahrens wahlweise auch miteinander kombiniert werden, um das/die oben formulierten Ziel(e) zumindest teilweise zu erreichen, und/oder um den gewünschten Effekt der Erfindung zu erzielen.

Es sei an dieser Stelle ausdrücklich erwähnt, dass alle Aspekte und Ausführungsvarianten, die im Zusammenhang mit der erfindungsgemäßen Verpackungsmaschine erläutert wurden, gleichermaßen Teilaspekte des erfindungsgemäßen Verfahrens betreffen oder bilden können. Wenn daher an einer Stelle bei der Beschreibung oder auch bei den Anspruchsdefinitionen zur erfindungsgemäßen Verpackungsmaschine von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren zur Programmierung von Bewegungsroutinen wenigstens eines innerhalb einer Verpackungsmaschine eingesetzten programmgesteuerten Manipulators erläutert wurden, gleichermaßen Teilaspekte der erfindungsgemäßen Verpackungsmaschine selbst betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Verpackungsmaschine.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie bereits oben erwähnt, die erfindungsgemäße Verpackungsmaschine vorrangig der Verarbeitung von flächigem Verpackungsmaterial wie bspw. von Schrumpffolie oder Verpackungsfolie dienen. Der mindestens eine in der Verpackungsmaschine eingesetzten Handhabungsroboter kann somit vorrangig dem Handling dieses Verpackungsmaterials bei der Versorgung der Verpackungsmaschine mit neuen Verbrauchseinheiten dienen. Das Verpackungsmaterial, d.h. die Schrumpffolie oder Verpackungsfolie ist normalerweise auf großen Rollen aufgewickelt, die aufgrund ihres Gewichts in aller Regel nicht manuell handhabbar sind.

Der Verpackungsmaschine können mittels eines Manipulators oder Handhabungsroboters bedarfsweise neue Rollen zugeführt werden. Ein bspw. stationär angeordneter Knickarmroboter oder Manipulator kann die jeweils der Verpackungsmaschine zuzuführenden neuen Rollen bspw. in zwei unterschiedliche Einbaupositionen einsetzen.

Mittels des Manipulators bzw. mit Hilfe des einen mehrachsig verschwenkbaren Auslegerarm aufweisenden Knickarmroboters können einzelne neue Rollen in eine der beiden Einbaupositionen eingesetzt werden, während sich in der weiteren Einbauposition noch eine verbrauchte oder teilweise verbrauchte Rolle befinden kann, von welcher noch während des Einsetzens der jeweiligen neuen Rolle weiterhin eine darauf befindliche Materialbahn abgewickelt wird, die in der Verpackungsmaschine als Verpackungsmaterial verarbeitet wird.

Während des weiteren Abwickelns der Materialbahn von der teilweise abgewickelten oder nahezu aufgebrauchten Rolle in einer der beiden Einbaupositionen kann insbesondere eine Verbindung bzw. Verschweißung einer äußeren Lage der neu eingesetzten Rolle mit der noch in der Verpackungsmaschine befindlichen Materialbahn erfolgen, wodurch die Verpackungsmaschine in einem kontinuierlichen Betrieb laufen kann, ohne dass der Verpackungsprozess zum Auswechseln einer aufgebrauchten Rolle gegen eine neue Rolle unterbrochen werden müsste.

Die neuen Rollen setzen sich normalerweise jeweils zusammen aus dem aufgewickelten flächigen Verpackungsmaterial bzw. der Verpackungs- oder Schrumpffolie sowie einem Kern, auf welchem das Verpackungsmaterial bzw. die Schrumpffolie aufgewickelt ist. Zur Entgegennahme einer neuen Rolle von einer geeigneten Zufördereinrichtung wie bspw. einer Horizontalfördereinrichtung, auf der die neue Rolle aufrechtstehend in Richtung zur Verpackungsmaschine befördert werden kann, taucht der Manipulator bzw. der Knickarmroboter über einen endseitig an seinem beweglichen Auslegerarm beweglich angeordneten Haltedorn stirnseitig in einen Kern einer neuen Rolle ein. Ein Armabschnitt des Manipulators bzw. des Knickarmroboters kann hierzu um eine Drehachse rotierend bewegt werden. Nach Eintauchen des Haltedorns in den Kern wird der Querschnittsdurchmesser des Haltedorns vergrößert, so dass die neue Rolle am Haltedorn klemmend fixiert ist. Der Kern ist hohlzylindrisch ausgebildet und die Form des Haltedorns ist hierzu korrespondierend, so dass der Haltedorn zur klemmenden Fixierung der neuen Rolle über seinen Außenumfang mit einer Innenmantelfläche des Kerns in Verbindung steht und diesen zuverlässig ergreifen kann.

Über die Horizontalfördereinrichtung können dem Manipulator bzw. dem Knickarmroboter neue Rollen in ununterbrochener Folge zur Verfügung gestellt werden, so dass bei Entnahme einer neuen Rolle von der Horizontalfördereinrichtung eine weitere neue Rolle in Richtung zum Manipulator weiterbewegt wird bzw. in Richtung des Manipulators nachrückt. Die Horizontalfördereinrichtung kann je nach Bedarf in gewünschter Weise getaktet oder durchgehend mit konstanter Geschwindigkeit betrieben werden. Ihr Betrieb kann insbesondere mittels einer Manipulatorsteuerung vorgegeben werden, die nicht nur die Horizontalfördereinrichtung in ihrer Fördergeschwindigkeit und/oder Taktung steuern kann, sondern auch den Auslegerarm des Manipulators in seinen Bewegungen. Die Manipulatorsteuerung verarbeitet vorzugsweise die Signale wenigstens einer Raumüberwachungseinrichtung, die bspw. durch eine optische Erfassungseinrichtung wie eine Kamera oder durch ein Lichtgitter gebildet sein kann.

Eine solche Raumüberwachungseinrichtung ist in der Lage, einen Bewegungsraum des Knickarmroboters und insbesondere die Bewegungen seines Auslegerarms zu erfassen und zu überwachen, womit auch die exakten Bewegungen des Auslegerarms mit dem daran schwenkbeweglich angeordneten Haltedorn in Bezug auf jede zu erfassende neue Rolle gemeint sind.

Eine optionale Hebeeinrichtung kann im Bereich der Horizontalfördereinrichtung positioniert sein. Diese Hebeeinrichtung kann wahlweise von einem Benutzer bedient werden, so dass mit dieser Hebeeinrichtung neue Rollen stehend auf der Horizontalfördereinrichtung positioniert werden können. Die neuen Rollen können bspw. stehend auf einer Palette angeliefert werden, von welcher sie der Benutzer mittels der von ihm in seinen Bewegungen steuerbaren Hebeeinrichtung entgegennehmen und mittels eines dort befindlichen, senkrecht nach unten weisenden Haltedorns auf der Horizontalfördereinrichtung platzieren kann.

Ein Arbeitsbereich der Hebeeinrichtung kann sich daher über die Palette sowie über einen Streckenabschnitt der Horizontalfördereinrichtung erstrecken. Diese hier beschriebene Steuerungs- und Zufördervariante stellt allerdings nur ein Beispiel von vielen Alternativen dar. Ebenso möglich sind kontinuierliche Zufördervarianten, die keiner solchen manuell unterstützen Handhabung bedürfen, wie sie hier beschrieben ist. Bei einer nicht in dieser Weise strukturierten Zuförderung kann es bspw. sinnvoll sein, im Bewegungsraum des Manipulators oder Knickarmroboters eine Zwischenablage für die neuen Rollen vorzusehen, um bei nicht drehrichtungskonformer Erfassung durch den Haltedorn des Knickarmroboters die Rollen dort ablegen zu können, den Haltedorn aus dem Kern herauszuziehen und die Rolle an ihrer anderen Stirnseite wieder zu erfassen, um sie in der jeweils benötigten Drehrichtung für die Einbaupositionen in der Verpackungsmaschine einsetzen zu können.

Weiterhin kann ein oben offener Container vorgesehen oder vorhanden sein, der sich im Arbeitsbereich des Manipulators befindet. Ist der Vorrat an Verpackungsmaterial bzw. Schrumpffolie einer der in der Verpackungsmaschine platzierten Rollen erschöpft, kann mittels des Knickarmroboters der aus Cellulose, Kunststoff, Holz oder Pappe bestehende Kern einer leeren Rolle aus der Verpackungsmaschine entnommen und in dem Container abgelegt werden. Erst nach Entnahme des Kerns kann eine neue Rolle in die jeweilige Einbauposition der Verpackungsmaschine eingesetzt werden, so dass der Manipulator bzw. der Knickarmroboter zunächst den Kern entnimmt und zeitlich hierauf folgend eine neue Rolle in die jeweilige Einbauposition einsetzt.

Wahlweise können neben dem Manipulator bzw. dem Knickarmroboter auch die Horizontalfördereinrichtung sowie einige Module der Verpackungsmaschine in signaltechnischer Verbindung mit der hier beschriebenen Manipulatorsteuerung stehen. Einige der betriebsrelevanten Parameter werden sinnvollerweise mittels der Raumüberwachungseinrichtung erfasst, von der Manipulatorsteuerung verarbeitet und die dadurch gewonnenen Daten in aufbereiteter Form der Verpackungsmaschine sowie dem Manipulator zur Verfügung gestellt, so dass dieser für ein möglichst exaktes Positionieren der Rollen in den Einbaupositionen und die dafür verantwortlichen Module der Verpackungsmaschine für ein möglichst präzises Abwickeln der Materialbahnen sorgen können.

In erster Linie jedoch kann die Manipulatorsteuerung für eine Bewegungssteuerung des durch den Knickarmroboter gebildeten Manipulators sorgen, wodurch eine exakte Positionierung und Zuförderung der neuen Rollen sowie deren Handhabung ermöglicht ist, auch wenn die exakte Position der Rollen auf der Horizontalfördereinrichtung nicht in jedem Fall zu gewährleisten ist, insbesondere bei manueller Positionierung der Rollen mittels der Hebeeinrichtung. Dennoch ist es wichtig, die exakte Erfassung jeder neuen Rolle durch den Haltedorn des Knickarmroboters mit Hilfe von präzise vorgegebenen Bewegungsroutinen der Manipulatorsteuerung sicherzustellen, ebenso wie eine exakte Positionierung der Rollen in den jeweiligen Einbaupositionen innerhalb der Verpackungsmaschine.

Normalerweise verhindert ein sich innerhalb des Bewegungsbereiches des Manipulators aufhaltender Benutzer oder eine sich dort aufhaltende Person einen vollautomatisierten und autonomen Betrieb des Manipulators. Ein solcher Aufenthalt des Benutzers oder einer Person innerhalb des Bewegungsraumes führt normalerweise zu einer Umschaltung des Manipulators oder Knickarmroboters in einen COBOT-Betrieb, was nachfolgend im Detail erläutert werden soll.

Bei der Verpackungsmaschine muss nicht zwingend eine Horizontalfördereinrichtung vorhanden sein, wie oben beschrieben. Die neuen Rollen können bspw. auch jeweils auf Paletten angeliefert werden, wobei auf jeder Palette mehrere Rollen, bspw. jeweils vier hochkant angeordnete Rollen stehen können, die jeweils einzeln vom als Knickarmroboter ausgebildeten Manipulator aufgenommen und in die Verpackungsmaschine eingesetzt werden. Zur Aufnahme einer neuen Rolle von einer der in Reichweite, d.h. innerhalb des Bewegungsraumes des Manipulators bzw. des Knickarmroboters stehenden Paletten taucht der Manipulator bzw. der Knickarmroboter über den endseitig an seinem beweglichen Auslegerarm beweglich angeordneten Haltedorn stirnseitig in einen Kern einer neuen Rolle ein.

Mindestens ein Armabschnitt des Manipulators bzw. des Knickarmroboters kann hierzu um eine Drehachse rotierend bewegt werden. Nach Eintauchen des Haltedorns in den Kern wird der Querschnittsdurchmesser des Haltedorns vergrößert, so dass die neue Rolle am Haltedorn klemmend fixiert ist. Der Kern ist hohlzylindrisch ausgebildet, die Form des Haltedorns hierzu korrespondierend, so dass der Haltedorn zur klemmenden Fixierung der neuen Rolle über seinen Außenumfang mit einer Innenmantelfläche des Kerns in Verbindung steht.

Über die regelmäßig in den Bewegungsraum gelieferten Paletten mit z.B. jeweils vier neuen Rollen werden dem Manipulator bzw. dem Knickarmroboter neue Rollen in ununterbrochener Folge zur Verfügung gestellt, so dass bei Entnahme aller neuen Rollen von einer der Paletten diese leere Palette gegen eine neue Palette mit weiteren vier Rollen ausgetauscht werden kann, die wiederum in den Bewegungsraum des Manipulators zu platzieren ist. Diese Anlieferung kann mittels geeigneter Flurförderfahrzeuge erfolgen, bspw. mittels sog. FTS (fahrerlose oder führerlose Transportsysteme), die durch selbstfahrende, ferngesteuerte und/oder über eigene Sensorsysteme zur Lenkung verfügende Transportfahrzeuge gebildet sein können, die bspw. jeweils eine Palette mit darauf platzierten Rollen in den Bewegungsraum hineinbefördern können.

Solche Transportsysteme bzw. FTS können je nach Bedarf in gewünschter Weise getaktet betrieben werden. Ihr Betrieb kann ggf. durch die Manipulatorsteuerung getaktet und gesteuert werden, die nicht nur die FTS in ihren Bewegungen, in ihrer jeweiligen Fördergeschwindigkeit und/oder Taktung steuern kann, sondern die auch den Manipulator in seinen Bewegungen zum Austausch der Rollen in der Verpackungsmaschine steuert. Die Manipulatorsteuerung verarbeitet außerdem die Signale der Raumüberwachungseinrichtung, die insbesondere durch eine optische Erfassungseinrichtung, eine Kamera, ein Lichtgitter oder wahlweise auch durch eine Ultraschallüberwachung o. dgl. gebildet sein kann.

Die Raumüberwachungseinrichtung ist zudem wichtig zur Überwachung des Bewegungsraumes des Knickarmroboters, da dieser während des Aufenthalts eines Benutzers innerhalb des Bewegungsraumes in einem anderen Modus betrieben wird als wenn der Benutzer sich außerhalb des Bewegungsraumes befindet.

Wahlweise kann sich innerhalb des Bewegungsraumes des Manipulators und in dessen unmittelbarer Nähe eine Zwischenablage zur optionalen Ablage neuer Rollen befinden. Eine solche Zwischenablage kann dafür genutzt werden, bei einer auf den Paletten normalerweise nicht definierten Drehrichtung der Rollen die unverzichtbare drehrichtungskonforme Positionierung jeder Rolle beim Einsetzen in die Verpackungsmaschine zu gewährleisten. In der Praxis erfasst der Haltedorn des Knickarmroboters jede einzelne Rolle, die auf der Palette steht, ohne dass dabei bereits die Drehrichtung überprüft wird.

Durch geeignete optische Kontrolle oder durch Erfassung auf sonstige Weise (z.B. induktiv, mittels Transponder o.ä.) wird während der Bewegung des Auslegerarmes mit der am Haltedorn beförderten Rolle in Richtung der Verpackungsmaschine überprüft, ob die Rolle dort direkt und ohne Umsetzen positioniert werden kann oder ob die Rolle womöglich die falsche Drehrichtung aufweist. Sollte dies der Fall sein, kann die Rolle durch eine entsprechende Bewegungssteuerung des Knickarmroboters auf der Zwischenablage abgelegt werden, wonach der Haltedorn aus dem Kern der abgelegten Rolle herausgezogen wird, um die Rolle an ihrer anderen Stirnseite wieder zu erfassen, um sie anschließend in der jeweils benötigten Drehrichtung für die Einbaupositionen in der Verpackungsmaschine einsetzen zu können. Die Ausgestaltung der Zwischenablage, ihre exakte Funktion und ihr Zusammenwirken mit dem Manipulator sowie ggf. mit der Raumüberwachungseinrichtung sollen hier jedoch nicht näher betrachtet werden.

Ein möglicherweise innerhalb des Bewegungsraumes stehender Benutzer hält sich dort normalerweise nur zu Wartungszwecken und/oder zu Programmierzwecken auf, nicht jedoch im laufenden regulären Handhabungsbetrieb des Manipulators, was ggf. ebenfalls durch die Raumüberwachungseinrichtung kontrolliert werden kann. Der Programmierbetrieb des Manipulators, der gemäß vorliegender Erfindung auch als sog. COBOT-Betrieb zu bezeichnen ist, soll nachfolgend näher erläutert werden.

Zudem soll nachfolgend ein Verfahrensablauf beschrieben werden, der für die Programmierung von Bewegungsroutinen bei der Positionierung des Auslegerarms und des endseitig daran befindlichen Haltedorns zur Aufnahme einer stehend auf der Palette befindlichen neuen Rolle erforderlich ist, insbesondere wenn die exakte Position der Rolle und ihres Dorns der Manipulatorsteuerung des Knickarmroboters nicht exakt bekannt ist.

Zu diesem Zweck kann mittels der Raumüberwachungseinrichtung erfasst werden, wenn sich der Benutzer innerhalb des Bewegungsraumes befindet, um somit die Manipulatorsteuerung in einen sog. COBOT-Betrieb umzuschalten, in der sensorisch erkannt wird, inwieweit der Benutzer die Bewegungen des Auslegerarms und des Haltedorns lenkt und vorgibt, so dass der Knickarmroboter diesen Vorgaben oder äußeren Beeinflussungen des Benutzers folgen und den Haltedorn sehr präzise an den Kern einer der Rollen hinführen und dort eintauchen lassen kann.

Die vom Benutzer ausgeübten äußeren Beeinflussungen können zudem aufgezeichnet und in der Manipulatorsteuerung gespeichert werden, um für die Erstellung neuer oder für die Modifikation schon vorhandener Bewegungsroutinen des programmgesteuerten Manipulators verwendet zu werden. Immer dann, wenn die exakten Positionen neu angelieferter und auf Paletten oder auf einer Horizontalfördereinrichtung befindlicher Rollen nicht bekannt sind, kann die Manipulatorsteuerung in der beschriebenen Weise neu programmiert oder umprogrammiert werden, bis die automatisierten Abläufe durch den Manipulator wieder aufgenommen werden können, ohne dass hierzu die manuellen Vorgaben des Benutzers noch vonnöten wären.

Sobald sich der Benutzer wieder aus dem Bewegungsraum entfernt hat, was insbesondere durch die Raumüberwachungseinrichtung erkannt wurde, und sobald die Programmierung der in der Manipulatorsteuerung abgespeicherten Bewegungsroutinen für den beweglichen Auslegerarm erfolgreich war, kann die Rolle in annähernd horizontaler Ausrichtung in eine der Einbaupositionen in der Verpackungsmaschine eingesetzt werden.

Die erwähnte Sensorik des Manipulators oder Knickarmroboters kann vorzugsweise dadurch realisiert sein, dass die Antriebsmomente für die elektrischen Stellmotoren des Manipulators oder des Roboters ausgewertet werden, woraus auf Beeinflussungen von außen durch den Benutzer geschlossen werden kann.

Die hier genannte Sensorik des Manipulators oder Roboters kennt normalerweise die erforderlichen Antriebsmomente und das elektrische Verhalten der jeweiligen Antriebsmotoren für die verschiedenen zusammenwirkenden Gelenkabschnitte, und dies weitgehend für alle denkbaren Positionen und Massen sowie den Schwerpunkten der jeweils ergriffenen Objekte oder Rollen, so dass bereits aus dem Vergleich der zu erwartenden Antriebsmomente und der zu erwartenden Stromaufnahme mit den tatsächlich gemessenen Werten auf eine Beeinflussung durch den Benutzer geschlossen werden kann. Da eine solchermaßen funktionierende Sensorik sensibel auf alle denkbaren manuellen Beeinflussungen reagieren kann, und da zudem die jeweils für das Programmieren neuer Bewegungsroutinen relevanten Bewegungsabläufe gegenüber einem reinen Roboterbetrieb deutlich verlangsamt sein können, lassen sich durch manuelles Lenken unter vergleichsweise geringem Kraftaufwand sehr präzise Bewegungsmuster des Manipulator- oder Roboterarms vorgeben.

Wahlweise kann die Sensorik in einer erweiterten oder alternativen Ausstattung auch optische und/oder akustische Erfassungseinrichtungen wie Kameras mit nachgeschalteter Bildauswertung oder Ultraschallsensoren mit nachgeschalteter Signalauswertung umfassen, die die Beeinflussungen und Bewegungen aufzeichnen und zusätzlich zur Programmierung zukünftiger Bewegungsroutinen des Roboters genutzt werden können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Fig. 1 zeigt in einer schematischen Perspektivansicht einen Teilabschnitt einer Ausführungsvariante einer erfindungsgemäßen Verpackungsmaschine. Zudem verdeutlicht Fig. 1 eine denkbare Umsetzung einer Ausführungsform für das erfindungsgemäße Verfahren.

Fig. 2 zeigt in einer schematischen Perspektivansicht einen Teilabschnitt einer weiteren Ausführungsvariante der erfindungsgemäßen Verpackungsmaschine sowie eine sinnvolle Umsetzung einer Ausführungsform für das erfindungsgemäße Verfahren.

Fig. 3 zeigt einen Teilbereich eines Manipulators, der von einem Benutzer in seinen Bewegungen geführt wird, während eine Rolle mit Verpackungsmaterial von einer Palette aufgenommen wird.

Fig. 4 zeigt den Manipulator gemäß Fig. 3, der ohne Benutzereingriff und in autonomer Weise arbeiten kann, um die Rolle mit Verpackungsmaterial in die Verpackungsmaschine einzusetzen.

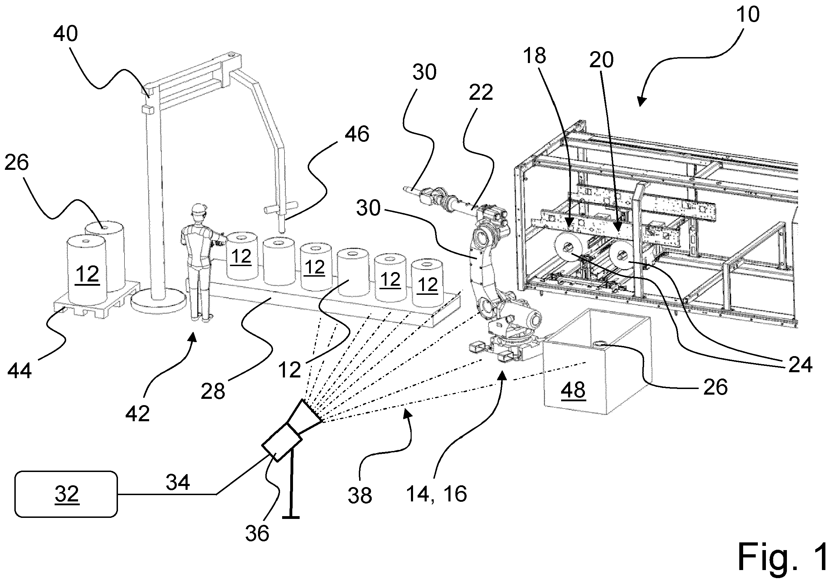

Für gleiche oder gleich wirkende Elemente der Erfindung werden in den Figuren 1 bis 4 jeweils gleiche Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Verpackungsmaschine oder das erfindungsgemäße Verfahren ausgestaltet sein können und stellen keine abschließende Begrenzung dar.

Die schematische Perspektivansicht der Fig. 1 zeigt in Ausschnitten eine erste Ausführungsvariante einer erfindungsgemäßen Verpackungsmaschine 10. Zudem verdeutlicht die Fig. 1 auch eine denkbare Umsetzung einer Ausführungsform für das oben beschriebene erfindungsgemäße Verfahren.

In der Verpackungsmaschine 10 wird flächiges Verpackungsmaterial wie bspw. Schrumpffolie oder Verpackungsfolie verarbeitet, was hier jedoch nicht näher dargestellt ist. Die Darstellung der Fig. 1 soll vielmehr das Handling dieses Verpackungsmaterials bei der Versorgung der Verpackungsmaschine 10 mit neuen Verbrauchseinheiten verdeutlichen. Das Verpackungsmaterial, d.h. die Schrumpffolie oder Verpackungsfolie ist auf großen, aufgrund ihres Gewichts in aller Regel nicht manuell handhabbaren Rollen 12 aufgewickelt.

Der Verpackungsmaschine 10 können mittels eines nachfolgend näher zu beschreibenden Manipulators 14 bedarfsweise neue Rollen 12 zugeführt werden. Der im gezeigten Ausführungsbeispiel als stationär angeordneter, Knickarmroboter 16 ausgebildete Manipulator 14 setzt die jeweils der Verpackungsmaschine 10 zuzuführenden neuen Rollen 12 in zwei unterschiedliche Einbaupositionen 18 und 20 ein, welche in Fig. 1 nur ansatzweise zu erkennen sind.

Mittels des Manipulators 14 bzw. mit Hilfe des einen mehrachsig verschwenkbaren Auslegerarm 22 aufweisenden Knickarmroboters 16 können einzelne neue Rollen 12 in eine der beiden Einbaupositionen 18 oder 20 eingesetzt werden, während sich in der weiteren Einbauposition 20 bzw. 18 noch eine verbrauchte oder teilweise verbrauchte Rolle 24 befindet, von welcher noch während des Einsetzens der jeweiligen neuen Rolle 12 weiterhin eine darauf befindliche Materialbahn abgewickelt wird, die in der Verpackungsmaschine 10 als Verpackungsmaterial verarbeitet wird.

Während des weiteren Abwickelns der Materialbahn von der teilweise abgewickelten oder nahezu aufgebrauchten Rolle 24 in einer der beiden Einbaupositionen 18 oder 20 kann insbesondere eine Verbindung bzw. Verschweißung einer äußeren Lage der neu eingesetzten Rolle 12 mit der noch in der Verpackungsmaschine 10 befindlichen Materialbahn erfolgen, wodurch die Verpackungsmaschine 10 in einem kontinuierlichen Betrieb laufen kann, ohne dass der Verpackungsprozess zum Auswechseln einer aufgebrauchten Rolle 24 gegen eine neue Rolle 12 unterbrochen werden müsste.

Die neuen Rollen 12 setzen sich jeweils zusammen aus dem aufgewickelten flächigen Verpackungsmaterial bzw. der Verpackungs- oder Schrumpffolie sowie einem Kern 26, auf welchem das Verpackungsmaterial bzw. die Schrumpffolie aufgewickelt ist. Zur Entgegennahme einer neuen Rolle 12 von einer in Fig. 1 erkennbaren Horizontalfördereinrichtung 28, die dort aufrechtstehend in Richtung zur Verpackungsmaschine 10 befördert werden, taucht der Manipulator 14 bzw. der Knickarmroboter 16 über einen endseitig an seinem beweglichen Auslegerarm 22 beweglich angeordneten Haltedorn 30 stirnseitig in einen Kern 26 einer neuen Rolle 12 ein. Ein Armabschnitt 22 des Manipulators 14 bzw. des Knickarmroboters 16 kann hierzu um eine Drehachse rotierend bewegt werden. Nach Eintauchen des Haltedorns 30 in den Kern 26 wird der Querschnittsdurchmesser des Haltedorns 30 vergrößert, so dass die neue Rolle 12 am Haltedorn 30 klemmend fixiert ist. Der Kern 26 ist hohlzylindrisch ausgebildet und die Form des Haltedorns 30 hierzu korrespondierend, so dass der Haltedorn 30 zur klemmenden Fixierung der neuen Rolle 12 über seinen Außenumfang mit einer Innenmantelfläche des Kerns 26 in Verbindung steht und diesen zuverlässig ergreifen kann.

Über die Horizontalfördereinrichtung 28 können dem Manipulator 14 bzw. dem Knickarmroboter 16 neue Rollen 12 in ununterbrochener Folge zur Verfügung gestellt werden, so dass bei Entnahme einer neuen Rolle 12 von der Horizontalfördereinrichtung 28 eine weitere neue Rolle 12 in Richtung zum Manipulator 14 weiterbewegt wird bzw. in Richtung des Manipulators 14 nachrückt. Die Horizontalfördereinrichtung 28 kann je nach Bedarf in gewünschter Weise getaktet oder durchgehend mit konstanter Geschwindigkeit betrieben werden. Ihr Betrieb wird vorgegeben durch eine hier nur schematisch angedeutete Manipulatorsteuerung 32, die nicht nur die Horizontalfördereinrichtung 28 in ihrer Fördergeschwindigkeit und/oder Taktung steuern kann, sondern auch den Auslegerarm 22 des Manipulators 14 in seinen Bewegungen. Die Manipulatorsteuerung 32 verarbeitet die Signale 34 wenigstens einer Raumüberwachungseinrichtung 36, die bspw. durch eine optische Erfassungseinrichtung wie eine Kamera oder durch ein Lichtgitter gebildet sein kann.

Die Raumüberwachungseinrichtung 36 erfasst und überwacht einen Bewegungsraum 38 des Knickarmroboters 16 und insbesondere die Bewegungen seines Auslegerarms 22, womit auch die exakten Bewegungen des Auslegerarms 22 mit dem daran schwenkbeweglich angeordneten Haltedorn 30 in Bezug auf jede zu erfassende neue Rolle 12 gemeint sind. Der z.B. optisch mittels Kamera oder Lichtgitter der Raumüberwachungseinrichtung 36 erfassbare Bewegungsraum 38 ist in der Darstellung der Fig. 1 zur besseren Veranschaulichung durch einen Strahlenfächer mit den unterbrochenen Linien angedeutet.

In Fig. 1 zu erkennen ist weiterhin eine im Bereich der Horizontalfördereinrichtung 28 positionierte Hebeeinrichtung 40, die von einem Benutzer 42 bedient wird und über welche neue Rollen 12 stehend auf der Horizontalfördereinrichtung 28 platziert werden können. Die neuen Rollen 12 können bspw. stehend auf einer Palette 44 angeliefert werden, von welcher sie der Benutzer 42 mittels der von ihm in seinen Bewegungen steuerbaren Hebeeinrichtung 40 entgegennehmen und mittels eines dort befindlichen, senkrecht nach unten weisenden Haltedorns 46 auf der Horizontalfördereinrichtung 28 platzieren kann.

Ein Arbeitsbereich der Hebeeinrichtung 40 erstreckt sich daher über die Palette 44 sowie über einen Streckenabschnitt der Horizontalfördereinrichtung 28. Diese gezeigte Steuerungs- und Zufördervariante stellt allerdings nur ein Beispiel von vielen Alternativen dar. Ebenso möglich sind kontinuierliche Zufördervarianten, die keiner solchen manuell unterstützen Handhabung bedürfen, wie sie anhand der Fig. 1 beschrieben ist. Bei einer nicht in dieser Weise strukturierten Zuförderung kann es bspw. sinnvoll sein, im Bewegungsraum 38 des Manipulators 14 oder Knickarmroboters 16 eine Zwischenablage für die neuen Rollen 12 vorzusehen, um bei nicht drehrichtungskonformer Erfassung durch den Haltedorn 30 des Knickarmroboters 16 die Rollen 12 dort ablegen zu können, den Haltedorn 30 aus dem Kern 26 herauszuziehen und die Rolle 12 an ihrer anderen Stirnseite wieder zu erfassen, um sie in der jeweils benötigten Drehrichtung für die Einbaupositionen 18 oder 20 in der Verpackungsmaschine 10 einsetzen zu können. Bei der in Fig. 1 gezeigten Variante der Verpackungsmaschine 10 bleibt es Aufgabe des Benutzers 42, für die jeweils richtige Positionierung der Rollen 12 auf der Horizontalfördereinrichtung 28 zu sorgen, insbesondere auch im Hinblick auf ihre richtige Drehrichtung in der jeweiligen Einbauposition 18 oder 20.

Die Fig. 1 zeigt weiterhin einen oben offenen Container 48, der sich im Arbeitsbereich 38 des Manipulators 14 befindet. Ist der Vorrat an Verpackungsmaterial bzw. Schrumpffolie einer der in der Verpackungsmaschine 10 platzierten Rollen 12 bzw. 24 erschöpft, wird mittels des Knickarmroboters 16 der aus Cellulose, Kunststoff, Holz oder Pappe bestehende Kern 26 einer leeren Rolle 24 aus der Verpackungsmaschine 10 entnommen und in dem Container 48 abgelegt. Erst nach Entnahme des Kern 26 kann eine neue Rolle 12 in die jeweilige Einbauposition 18 bzw. 20 der Verpackungsmaschine 10 eingesetzt werden, so dass der Manipulator 14 bzw. der Knickarmroboter 16 zunächst den Kern 26 entnimmt und zeitlich hierauf folgend eine neue Rolle 12 in die jeweilige Einbauposition 18 bzw. 20 einsetzt.

Wahlweise können neben dem Manipulator 14 bzw. dem Knickarmroboter 16 auch die Horizontalfördereinrichtung 28 sowie einige Module der Verpackungsmaschine 10 in signaltechnischer Verbindung mit der Manipulatorsteuerung 32 stehen. Einige der betriebsrelevanten Parameter werden sinnvollerweise mittels der Raumüberwachungseinrichtung 36 erfasst, von der Manipulatorsteuerung 32 verarbeitet und die dadurch gewonnenen Daten in aufbereiteter Form der Verpackungsmaschine 10 sowie dem Manipulator 14 zur Verfügung gestellt, so dass dieser für ein möglichst exaktes Positionieren der Rollen 12 in den Einbaupositionen 18 und 20 und die dafür verantwortlichen Module der Verpackungsmaschine 10 für ein möglichst präzises Abwickeln der Materialbahnen sorgen können.

In erster Linie jedoch kann die Manipulatorsteuerung 32 für eine Bewegungssteuerung des durch den Knickarmroboter 16 gebildeten Manipulators 14 sorgen, wodurch eine exakte Positionierung und Zuförderung der neuen Rollen 12 sowie deren Handhabung ermöglicht ist, auch wenn die exakte Position der Rollen 12 auf der Horizontalfördereinrichtung 28 nicht in jedem Fall zu gewährleisten ist, insbesondere bei manueller Positionierung der Rollen 12 mittels der Hebeeinrichtung 40. Dennoch ist es wichtig, die exakte Erfassung jeder neuen Rolle 12 durch den Haltedorn 30 des Knickarmroboters 16 mit Hilfe von präzise vorgegebenen Bewegungsroutinen der Manipulatorsteuerung 32 sicherzustellen, ebenso wie eine exakte Positionierung der Rollen 12 in den jeweiligen Einbaupositionen 18 und/oder 20 innerhalb der Verpackungsmaschine 10.

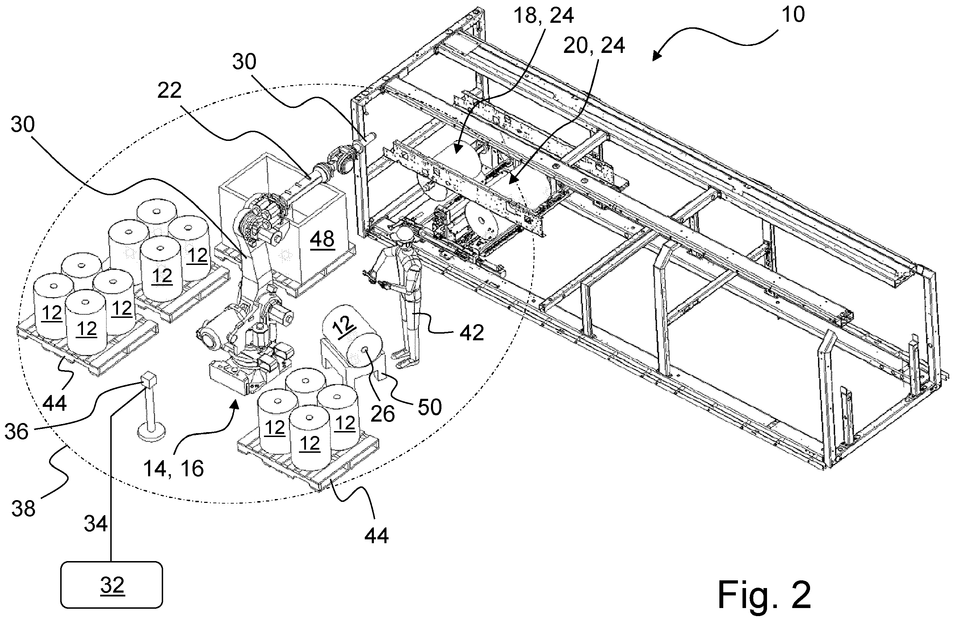

Die schematische Perspektivansicht der Fig. 2 veranschaulicht eine zweite Ausführungsvariante der erfindungsgemäßen Verpackungsmaschine 10 sowie eine sinnvolle Umsetzung einer Ausführungsform für das erfindungsgemäße Verfahren. Die Verpackungsmaschine 10 unterscheidet sich nicht signifikant von der zuvor beschriebenen Variante gemäß Fig. 1.

Auch hier sind wiederum Vorkehrungen zur Handhabung von flächigem Verpackungsmaterial wie bspw. Schrumpffolie oder Verpackungsfolien vorgesehen, die der Verpackungsmaschine 10 entsprechend dem verbrauchsbedingten Nachschubbedarf mittels des als Knickarmroboter 16 ausgebildeten Manipulators 14 einzeln auf Rollen 12 zur Verfügung gestellt werden. Wie bei der ersten Variante gemäß Fig. 1 setzt der Manipulator 14 die jeweils der Verpackungsmaschine 10 zuzuführenden neuen Rollen 12 in zwei unterschiedliche Einbaupositionen 18 und 20 ein.

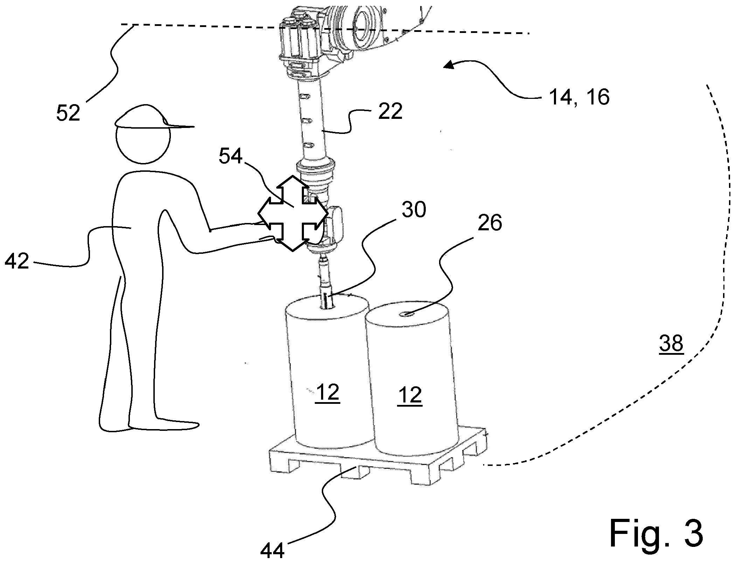

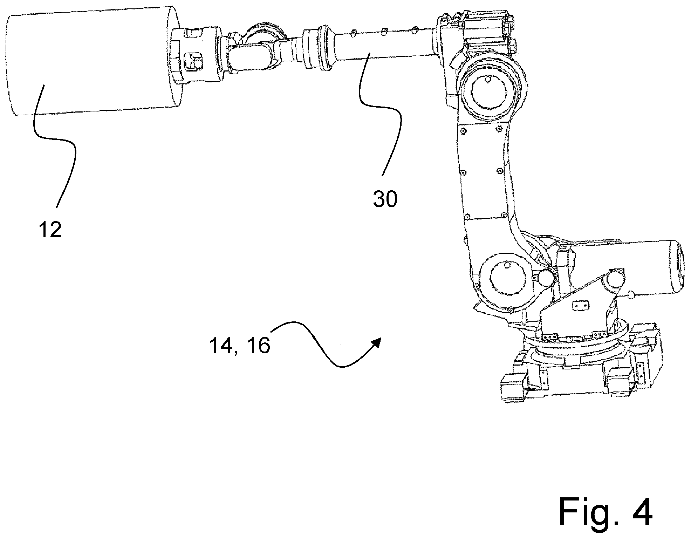

Für die Ausführungsvarianten der Figuren 1 und 2 kann im Hinblick auf die nachfolgenden Erläuterungen unter Bezugnahme auf die Figuren 3 und 4 darauf hingewiesen werden, dass der sich innerhalb des Bewegungsbereiches 38 des Manipulators 14 aufhaltende Benutzer 42 einen vollautomatisierten und autonomen Betrieb des Manipulators 14 normalerweise verhindert. Ein solcher Aufenthalt des Benutzers 42 innerhalb des Bewegungsraumes 38 führt normalerweise zu einer Umschaltung des Manipulators 14 oder Knickarmroboters 16 in einen COBOT-Betrieb, was nachfolgend im Detail erläutert werden soll.

Die in Fig. 2 gezeigte zweite Variante der Vorrichtung 10 verzichtet auf eine Horizontalfördereinrichtung, sondern bekommt die neuen Rollen 12 jeweils auf Paletten 44 angeliefert, wobei auf jeder Palette 44 vier hochkant angeordnete Rollen 12 stehen, die jeweils einzeln vom als Knickarmroboter 16 ausgebildeten Manipulator 14 aufgenommen und in die Verpackungsmaschine 10 eingesetzt werden. Zur Aufnahme einer neuen Rolle 12 von einer der in Reichweite, d.h. innerhalb des Bewegungsraumes 38 des Manipulators 14 bzw. des Knickarmroboters 16 stehenden Paletten 44 taucht der Manipulator 14 bzw. der Knickarmroboter 16 über den endseitig an seinem beweglichen Auslegerarm 22 beweglich angeordneten Haltedorn 30 stirnseitig in einen Kern 26 einer neuen Rolle 12 ein, wie dies bereits anhand der Fig. 1 erläutert wurde.

Ein Armabschnitt des Manipulators 14 bzw. des Knickarmroboters 16 kann hierzu um eine Drehachse rotierend bewegt werden. Nach Eintauchen des Haltedorns 30 in den Kern 26 wird der Querschnittsdurchmesser des Haltedorns 30 vergrößert, so dass die neue Rolle 12 am Haltedorn 30 klemmend fixiert ist. Der Kern 26 ist hohlzylindrisch ausgebildet, die Form des Haltedorns 30 hierzu korrespondierend, so dass der Haltedorn 30 zur klemmenden Fixierung der neuen Rolle 12 über seinen Außenumfang mit einer Innenmantelfläche des Kerns 26 in Verbindung steht.

Über die regelmäßig in den Bewegungsraum 38 gelieferten Paletten 44 mit jeweils vier neuen Rollen 12 werden dem Manipulator 14 bzw. dem Knickarmroboter 16 neue Rollen 12 in ununterbrochener Folge zur Verfügung gestellt, so dass bei Entnahme aller neuen Rollen 12 von einer der Paletten 44 diese leere Palette 44 gegen eine neue Palette 44 mit weiteren vier Rollen 12 ausgetauscht werden kann, die wiederum in den Bewegungsraum 38 des Manipulators 14 zu platzieren ist. Diese Anlieferung kann mittels geeigneter Flurförderfahrzeuge erfolgen, bspw. mittels sog. FTS (fahrerlose oder führerlose Transportsysteme), die durch selbstfahrende, ferngesteuerte und/oder über eigene Sensorsysteme zur Lenkung verfügende Transportfahrzeuge gebildet sein können, die bspw. jeweils eine Palette 44 mit darauf platzierten Rollen 12 in den Bewegungsraum 48 hineinbefördern können.

Solche Transportsysteme bzw. FTS können je nach Bedarf in gewünschter Weise getaktet betrieben werden. Ihr Betrieb kann ggf. durch die Manipulatorsteuerung 32 getaktet und gesteuert werden, die nicht nur die (hier nicht gezeigten) FTS in ihren Bewegungen, in ihrer jeweiligen Fördergeschwindigkeit und/oder Taktung steuern kann, sondern die auch den Manipulator 14 in seinen Bewegungen zum Austausch der Rollen 12 in der Verpackungsmaschine 10 steuert. Die Manipulatorsteuerung 32 verarbeitet außerdem die Signale 34 der Raumüberwachungseinrichtung 36, die auch bei der Variante gemäß Fig. 2 insbesondere durch eine optische Erfassungseinrichtung, eine Kamera, ein Lichtgitter oder wahlweise auch durch eine Ultraschallüberwachung o. dgl. gebildet sein kann.

Die Raumüberwachungseinrichtung 36 ist zudem wichtig zur Überwachung des Bewegungsraumes 38 des Knickarmroboters 16, da dieser während des Aufenthalts eines Benutzers 42 innerhalb des Bewegungsraumes 38 in einem anderen Modus betrieben wird als wenn der Benutzer 42 sich außerhalb des Bewegungsraumes 38 befindet. Der z.B. optisch mittels der durch eine Kamera gebildeten Raumüberwachungseinrichtung 36 erfassbare Bewegungsraum 38 ist in der Darstellung der Fig. 2 durch eine Ellipse mit unterbrochener Linierung angedeutet.

Bei der in Fig. 2 gezeigten Variante der Verpackungsmaschine 10 befindet sich innerhalb des Bewegungsraumes 38 des Manipulators 14 und in dessen unmittelbarer Nähe eine Zwischenablage 50 zur optionalen Ablage neuer Rollen 12. Die Zwischenablage 50 kann dafür genutzt werden, bei einer auf den Paletten 44 normalerweise nicht definierten Drehrichtung der Rollen 12 die unverzichtbare drehrichtungskonforme Positionierung jeder Rolle 12 beim Einsetzen in die Verpackungsmaschine 10 zu gewährleisten. In der Praxis erfasst der Haltedorn 30 des Knickarmroboters 16 jede einzelne Rolle 12, die auf der Palette 44 steht, ohne dass dabei bereits die Drehrichtung überprüft wird.

Durch geeignete optische Kontrolle oder durch Erfassung auf sonstige Weise (z.B. induktiv, mittels Transponder o.ä.) wird während der Bewegung des Auslegerarmes 22 mit der am Haltedorn 30 beförderten Rolle 12 in Richtung der Verpackungsmaschine 10 überprüft, ob die Rolle 12 dort direkt und ohne Umsetzen positioniert werden kann oder ob die Rolle 12 womöglich die falsche Drehrichtung aufweist. Sollte dies der Fall sein, kann die Rolle 12 durch eine entsprechende Bewegungssteuerung des Knickarmroboters 16 auf der Zwischenablage 50 abgelegt werden, wonach der Haltedorn 30 aus dem Kern 26 der abgelegten Rolle 12 herausgezogen wird, um die Rolle 12 an ihrer anderen Stirnseite wieder zu erfassen, um sie anschließend in der jeweils benötigten Drehrichtung für die Einbaupositionen 18 oder 20 in der Verpackungsmaschine 10 einsetzen zu können. Die Ausgestaltung der Zwischenablage 50, ihre exakte Funktion und ihr Zusammenwirken mit dem Manipulator 14 sowie ggf. mit der Raumüberwachungseinrichtung 36 sollen hier nicht näher interessieren.

Der in Fig. 2 innerhalb des Bewegungsraumes 38 stehende Benutzer 42 hält sich dort normalerweise nur zu Wartungszwecken und/oder zu Programmierzwecken auf, nicht jedoch im laufenden regulären Handhabungsbetrieb des Manipulators 14, was ggf. ebenfalls durch die Raumüberwachungseinrichtung 36 kontrolliert werden kann. Der Programmierbetrieb des Manipulators 14, der gemäß vorliegender Erfindung auch als sog. COBOT-Betrieb zu bezeichnen ist, soll anhand der Figuren 3 und 4 näher erläutert werden.

Auch in Fig. 2 ist der oben offene Container 48 erkennbar, der sich im Arbeitsbereich 38 des durch den Knickarmroboter 16 gebildeten Manipulators 14 befindet. Ist der Vorrat an Verpackungsmaterial bzw. Schrumpffolie einer in der Verpackungsmaschine 10 platzierten Rollen 12 bzw. 24 erschöpft, wird mittels des Knickarmroboters 16 der aus Cellulose, Kunststoff, Holz oder Pappe bestehende Kern 26 einer leeren Rolle 24 aus der Verpackungsmaschine 10 entnommen und in dem Container 48 abgelegt. Erst nach Entnahme des Kern 26 kann eine neue Rolle 12 in die jeweilige Einbauposition 18 bzw. 20 der Verpackungsmaschine 10 eingesetzt werden, so dass der Manipulator 14 bzw. der Knickarmroboter 16 zunächst den Kern 26 entnimmt und zeitlich hierauf folgend eine neue Rolle 12 in die jeweilige Einbauposition 18 bzw. 20 einsetzt.

Die schematischen Darstellungen der Figuren 3 und 4 zeigen einen Teil des Knickarmroboters 16, der den Manipulator 14 zur Handhabung der Rollen 12 an und in der Verpackungsmaschine 10 bildet. Der schwenkbare Auslegerarm bzw. der Armabschnitt 22 des Knickarmroboters 16 ist um die in Fig. 3 horizontal verlaufende Achse 52 schwenkbar, so dass der Haltedorn 30 des Knickarmroboters 16 zum Eintauchen in den Kern 26 der jeweiligen neuen Rolle 12 mit vertikaler Orientierung seiner Längsachse ausgerichtet werden kann. Wurde die jeweilige neue Rolle 12 mittels des Knickarmroboters 16 bzw. mittels des Haltedorns 30 erfasst, so kann die neue Rolle 12 durch eine erneute Schwenkbewegung des Greifarmes 22 um die Achse 52 gedreht und zeitlich hierauf in ihre jeweilige zugeordnete Einbauposition 18 bzw. 20 (vgl. Figuren 1 und 2) eingesetzt werden.

Darüber hinaus soll anhand der Figuren 3 und 4 der Verfahrensablauf beschrieben werden, der für die Programmierung von Bewegungsroutinen bei der Positionierung des Auslegerarms 22 und des endseitig daran befindlichen Haltedorns 30 zur Aufnahme einer stehend auf der Palette 44 befindlichen neuen Rolle 12 erläutert werden, wenn die exakte Position der Rolle 12 und ihres Dorns 26 der Manipulatorsteuerung 32 des Knickarmroboters 16 nicht exakt bekannt ist.

Zu diesem Zweck kann mittels der Raumüberwachungseinrichtung 36 erfasst werden, wenn sich der Benutzer 42 innerhalb des Bewegungsraumes 38 befindet (vgl. Figuren 1 und 2), um somit die Manipulatorsteuerung 32 in einen sog. COBOT-Betrieb umzuschalten, in der sensorisch erkannt wird, inwieweit der Benutzer 42 die Bewegungen des Auslegerarms 22 und des Haltedorns 30 lenkt und vorgibt, so dass der Knickarmroboter 16 diesen Vorgaben oder äußeren Beeinflussungen 54 (siehe Doppelpfeil in Fig. 3) des Benutzers 42 folgen und den Haltedorn 30 sehr präzise an den Kern 26 einer der Rollen 12 hinführen und dort eintauchen lassen kann.

Die vom Benutzer 42 ausgeübten äußeren Beeinflussungen 54 können zudem aufgezeichnet und in der Manipulatorsteuerung 32 gespeichert werden, um für die Erstellung neuer oder für die Modifikation schon vorhandener Bewegungsroutinen des programmgesteuerten Manipulators 14 verwendet zu werden. Immer dann, wenn die exakten Positionen neu angelieferter und auf Paletten 42 oder auf einer Horizontalfördereinrichtung 28 befindlicher Rollen 12 nicht bekannt sind, kann die Manipulatorsteuerung 32 in der beschriebenen Weise neu programmiert oder umprogrammiert werden, bis die automatisierten Abläufe durch den Manipulator 14 wieder aufgenommen werden können, ohne dass hierzu die manuellen Vorgaben des Benutzers 42 noch vonnöten wären.

Diesen automatisierten Ablauf mit dem sich innerhalb des Bewegungsraumes 38 bewegenden Auslegerarms 22 des Knickarmroboters 16 und einer am Haltedorn 30 fixierten Rolle 12 ist in Fig. 4 verdeutlicht. Da sich der Benutzer 42 wieder aus dem Bewegungsraum 38 entfernt hat, was insbesondere durch die Raumüberwachungseinrichtung 36 erkannt wurde, und da die Programmierung der in der Manipulatorsteuerung 32 abgespeicherten Bewegungsroutinen für den beweglichen Auslegerarm 22 erfolgreich war, kann die Rolle 12 in annähernd horizontaler Ausrichtung in eine der Einbaupositionen 18 oder 20 in der Verpackungsmaschine 10 eingesetzt werden.

Die erwähnte Sensorik des Manipulators 14 oder Knickarmroboters 16 kann vorzugsweise dadurch realisiert sein, dass die Antriebsmomente für die elektrischen Stellmotoren des Manipulators 14 oder des Roboters 16 ausgewertet werden, woraus auf Beeinflussungen von außen durch den Benutzer 42 geschlossen werden kann.

Die hier genannte Sensorik des Manipulators 14 oder Roboters 16 kennt normalerweise die erforderlichen Antriebsmomente und das elektrische Verhalten der jeweiligen Antriebsmotoren für die verschiedenen zusammenwirkenden Gelenkabschnitte, und dies weitgehend für alle denkbaren Positionen und Massen sowie den Schwerpunkten der jeweils ergriffenen Objekte oder Rollen 12, so dass bereits aus dem Vergleich der zu erwartenden Antriebsmomente und der zu erwartenden Stromaufnahme mit den tatsächlich gemessenen Werten auf eine Beeinflussung durch den Benutzer 42 geschlossen werden kann. Da eine solchermaßen funktionierende Sensorik sensibel auf alle denkbaren manuellen Beeinflussungen reagieren kann, und da zudem die jeweils für das Programmieren neuer Bewegungsroutinen relevanten Bewegungsabläufe gegenüber einem reinen Roboterbetrieb deutlich verlangsamt sein können, lassen sich durch manuelles Lenken unter vergleichsweise geringem Kraftaufwand sehr präzise Bewegungsmuster des Manipulator- oder Roboterarms vorgeben.

Wahlweise kann die Sensorik in einer erweiterten oder alternativen Ausstattung auch optische und/oder akustische Erfassungseinrichtungen wie Kameras mit nachgeschalteter Bildauswertung oder Ultraschallsensoren mit nachgeschalteter Signalauswertung umfassen, die die Beeinflussungen und Bewegungen aufzeichnen und zusätzlich zur Programmierung zukünftiger Bewegungsroutinen des Roboters genutzt werden können.

Folgendes sei als ergänzender Hinweis zu den vorstehenden Ausführungen gegeben. Wenn auch im Zusammenhang mit den in den Figuren gezeigten Ausführungsvarianten und deren vorstehenden Beschreibungen oftmals oder auch generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen von Teilen der Vorrichtungen der Verpackungsmaschine 10, deren Einzelheiten oder anderer gezeichneter Elemente in irgendeiner Weise in seinem Verständnis beeinträchtigt wäre. Die Figuren ermöglichen es dem Fachmann als Leser vielmehr, anhand der konkreter erläuterten Umsetzungen des erfindungsgemäßen Verfahrens und des konkreter erläuterten Aufbaus der erfindungsgemäßen Verpackungsmaschine ein besseres Verständnis für den in den Ansprüchen sowie im allgemeinen Teil der Beschreibung zumindest hinsichtlich einiger Aspekte allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Verpackungsmaschine
- 12: Rolle, neue Rolle
- 14: Manipulator
- 16: Knickarmroboter
- 18: Einbauposition, erste Einbauposition
- 20: Einbauposition, zweite Einbauposition
- 22: Auslegerarm, verschwenkbarer Auslegerarm, Schwenkarm
- 24: Rolle, verbrauchte Rolle, teilweise abgewickelte Rolle, teilweise verbrauchte Rolle, leere Rolle
- 26: Kern, Rollenkern
- 28: Horizontalfördereinrichtung
- 30: Haltedorn, verschwenkbarer Haltedorn
- 32: Manipulatorsteuerung
- 34: Ausgangssignale, Signale, Raumdaten, Bewegungsdaten, Sensordaten
- 36: Raumüberwachungseinrichtung
- 38: Bewegungsraum
- 40: Hebeeinrichtung
- 42: Benutzer, Bedienperson
- 44: Palette
- 46: Haltedorn, senkrechter Haltedorn
- 48: Container
- 50: Zwischenablage
- 52: Schwenkachse (des Auslegerarms)
- 54: Beeinflussung, manuelle Beeinflussung, äußere Beeinflussung

## Patentansprüche

1. Verpackungsmaschine (10) mit wenigstens einem programmgesteuerten Manipulator (14), dem eine Sensorik zur Erfassung von auf den Manipulator (14) einwirkenden äußeren Beeinflussungen (54) zugeordnet ist, wobei die von der Sensorik erfassten Signaldaten einer Manipulatorsteuerung (32) als Eingangsgrößen zur Anpassung der vom Manipulator (14) jeweils ausgeführten Manipulationsbewegungen an die von der Sensorik erfassten äußeren Einwirkungen zur Verfügung gestellt werden,
**dadurch gekennzeichnet, dass** die Manipulatorsteuerung (32) in einem Programmiermodus betreibbar ist, der eine Aufzeichnung zumindest solcher von mittels der Sensorik erfassten äußeren Einwirkungen vorsieht, die auf manuellen Beeinflussungen (54) eines sich innerhalb eines Bewegungsraumes (38) des Manipulators (14) aufhaltenden Benutzers (42) beruhen, wobei im Programmiermodus aus den auf den Benutzer (42) zurückzuführenden manuellen Beeinflussungen (54) des Manipulators (14) Programmschritte zur Erstellung neuer und/oder zur Modifikation schon vorhandener Bewegungsroutinen des programmgesteuerten Manipulators (14) ableitbar sind.

2. Verpackungsmaschine nach Anspruch 1, bei welcher der Manipulator (14) mit einer separaten Sensorik gekoppelt ist, mittels der eine Umschaltung in einen Programmiermodus auslösbar ist.

3. Verpackungsmaschine nach Anspruch 1 oder 2, bei welcher Antriebsmomente von Bewegungsantrieben des Manipulators (14) erfasst und ausgewertet werden, woraus ein Ausmaß der manuellen Beeinflussungen (54) ableitbar ist.

4. Verpackungsmaschine nach einem der Ansprüche 1 bis 3, bei welcher erfasste äußere Einwirkungen, die auf manuellen Beeinflussungen (54) beruhen, in der Manipulatorsteuerung (32) speicherbar und zur Vorgabe von Bewegungsroutinen des programmgesteuerten Manipulators (14) abrufbar sind.

5. Verpackungsmaschine nach einem der Ansprüche 1 bis 4, bei welcher der programmgesteuerte Manipulator (14) durch einen Handhabungsroboter gebildet ist.

6. Verpackungsmaschine nach Anspruch 5, bei welcher der Handhabungsroboter einen beweglichen Schwenkarm mit um mehrere Achsen beweglichen Armabschnitten umfasst.

7. Verfahren zur Programmierung von Bewegungsroutinen wenigstens eines innerhalb einer Verpackungsmaschine (10) eingesetzten programmgesteuerten Manipulators (14), welchem Manipulator (14) eine Sensorik zur Erfassung von äußeren Einwirkungen auf den Manipulator (14) zugeordnet ist, welche äußeren Einwirkungen manuelle Beeinflussungen (54) eines sich innerhalb eines Bewegungsraumes (38) des Manipulators (14) aufhaltenden Benutzers (42) umfassen, wobei die vom Manipulator (14) jeweils ausgeführten Manipulationsbewegungen an die von der Sensorik erfassten äußeren Einwirkungen angepasst werden,
**dadurch gekennzeichnet, dass** zumindest definierte Teilabschnitte der vom Benutzer (42) vorgegebenen und mittels der Sensorik erfassten manuellen Beeinflussungen (54) aufgezeichnet und für die Erstellung neuer oder für die Modifikation schon vorhandener Bewegungsroutinen des programmgesteuerten Manipulators (14) verarbeitet werden.

8. Verfahren nach Anspruch 7, bei dem die erstellten neuen oder modifizierten vorhandenen Bewegungsroutinen des programmgesteuerten Manipulators (14) solche Bewegungsroutinen sind, die für die Bereitstellung von durch die Verpackungsmaschine (10) genutztem Verbrauchsmaterial notwendig sind.

9. Verfahren nach Anspruch 7 oder 8, bei dem erfasste äußere Einwirkungen, die auf manuellen Beeinflussungen (54) beruhen, in der Manipulatorsteuerung (32) gespeichert und zur Vorgabe von Bewegungsroutinen des programmgesteuerten Manipulators (14) abgerufen werden.

10. Verfahren nach einem der Ansprüche 7 bis 9, bei dem Antriebsmomente von Bewegungsantrieben des Manipulators (14) erfasst und ausgewertet werden, woraus ein Ausmaß der manuellen Beeinflussungen (54) abgeleitet und der Manipulatorsteuerung (32) zur Verfügung gestellt wird.

11. Verfahren nach einem der Ansprüche 7 bis 10, bei dem die Sensorik des Manipulators (14) mehrere Durchläufe zur Erkennung definierter Positionen durchführen kann, bei denen sie jeweils vom Benutzer (42) assistiert wird, indem dieser manuelle Beeinflussungen (54) auf den Manipulator (14) ausübt.

12. Verfahren nach einem der Ansprüche 7 bis 11, bei dem der Manipulator (14) mit einer separaten Sensorik kommuniziert, mittels der eine Umschaltung in einen Programmiermodus und aus dem Programmiermodus heraus ausgelöst wird.

13. Verfahren nach Anspruch 12, bei dem eine Umschaltung zwischen einem Normalbetrieb und dem Programmiermodus durch Erkennung eines Aufenthalts des Benutzers (42) innerhalb des Bewegungsraumes (38) des Manipulators (14) erfolgt.

14. Verfahren nach einem der Ansprüche 7 bis 13, bei dem der Manipulator (14) als Beladeeinrichtung für manuell nicht bewältigbare Hebe- und/oder Positionierungsaufgaben an und/oder in der Verpackungsmaschine (10) eingesetzt wird, insbesondere für Hebe- und/oder Positionierungsaufgaben von Verbrauchsmaterialien für einen Verpackungsbetrieb der Verpackungsmaschine (10).

15. Verfahren nach einem der Ansprüche 7 bis 14, bei dem der programmgesteuerte Manipulator (14) durch einen Handhabungsroboter gebildet ist, welcher Handhabungsroboter insbesondere einen beweglichen Schwenkarm mit um mehrere Achsen beweglichen Armabschnitten aufweist.
